Europäisches Patentamt

European Patent Office

Office européen des brevets

(11) Veröffentlichungsnummer: **0 426 146 A2**

## (12) EUROPÄISCHE PATENTANMELDUNG

(21) Anmeldenummer: **90120889.2**

(22) Anmeldetag: **31.10.90**

(51) Int. Cl.⁵: **B24B 3/02, B23Q 16/02**

(30) Priorität: **03.11.89 DE 3936699**

(43) Veröffentlichungstag der Anmeldung:
**08.05.91 Patentblatt 91/19**

(84) Benannte Vertragsstaaten:
**CH DE FR GB IT LI**

(71) Anmelder: **Zang, Volker**
**Westerheimer Strasse 30**
**W-7903 Feldstetten Post Laichingen 4(DE)**

(72) Erfinder: **Zang, Volker**
**Westerheimer Strasse 30**
**W-7903 Feldstetten Post Laichingen 4(DE)**

(74) Vertreter: **Puschmann, Heinz H., Dipl.-Ing.(FH)**
**et al**
**Sendlinger Strasse 35**
**W-8000 München 2(DE)**

(54) **Aufsatzgerät für eine Werkzeug-Schleifmaschine.**

(57) Aufsatzgerät für eine Werkzeug-Schleifmaschine, mit einem numerisch steuerbaren Längsschlitten, auf dem ein numerisch steuerbarer Querschlitten angeordnet ist, der einen numerisch gesteuerten Teilkopf trägt, der mit einem längsverschieblichen Reitstock starr verbunden ist, wobei der Teilkopf um die Hochachse und um eine die Hochachse schneidende Querachse schwenk- und feststellbar gelagert ist, und wobei der Längsschlitten des Aufsatzgerätes auf dem Längsschlitten der Werkzeug-Schleifmaschine in fixierter Lage aufzuspannen ist.

FIG. 1

## AUFSATZGERÄT FÜR EINE WERKZEUG-SCHLEIFMASCHINE

Die Erfindung betrifft eine Anordnung für eine numerisch gesteuerte Werkzeug-Schleifmaschine mit einem Aufspanntisch, einem höhenverstellbaren, um mindestens eine Achse schwenkbaren Schleifkopf, einem Teilkopf mit einer Werkzeugeinspannvorrichtung und mit einem Reitstock; vgl. zum Beispiel DE-28 28 168 A1.

Mit Hilfe solcher numerisch gesteuerter Werkzeugschleif-Maschinen lassen sich bekanntlich Werkzeuge aller Art nach vorgegebenen geometrischen Konfigurationen selbsttätig schleifen, wobei die Anzahl der zu steuernden Bezugsachsen mit der Anzahl der erforderlichen Freiheitsgrade für die durchzuführenden Schleifbewegungen steigt, was sehr schnell zu relativ komplizierten Steuerungen führt, zumal die einzelnen Bewegungen sowohl gleichzeitig und abhängig als auch nacheinander und unabhängig voneinander auszuführen sind.

Auch an die Steifigkeit solcher Maschinen und deren Teile werden hohe Anforderungen gestellt, die mit der Anzahl der zu steuernden Bezugsachsen ebenfalls anwachsen, da für das Schleifen von Werkzeugschneiden mit ihren Schneid-, Frei- und Spanwinkeln eine hohe reproduzierbare Genauigkeit notwendig ist.

Werkzeug-Schleifmaschinen dieser Art sind daher überaus teuer in der Anschaffung und Unterhaltung, so daß trotz der Vorteile numerisch gesteuerter Werkzeug-Schleifmaschinen eine Vielzahl von handgesteuerten Werkzeug-Schleifmaschinen immer noch im Einsatz ist.

Ein Umbau solcher Werkzeug-Schleifmaschinen in zumindest teilweise numerisch gesteuerte Werkzeug-Schleifmaschinen hat jedoch wenig Aussicht auf Erfolg, trotzdem besteht für die Modernisierung solcher Werkzeug-Schleifmaschinen ein großer Bedarf.

Aufgabe der Erfindung ist es, diesem Mangel abzuhelfen durch ein neues, auf eine übliche Werzeug-Schleifmaschine aufsetzbares Gerät, in das die für eine numerische Steuerung unbedingt notwendigen Bauteile als sogenannte Hardware integriert sind.

Diese Aufgabe ist erfindungsgemäß dadurch gelöst, daß ein numerisch gesteuerter Teilkopf mit seiner Werkzeug-Einspannvorrichtung und ein Reitstock auf einem numerisch steuerbaren Längsschlitten querbeweglich und um die Hochachse drehbar sowie um eine die Hochachse schneidende Querachse schwenkund feststellbar gelagert und alle Bauteile derart angeordnet sind, daß sie ein bahngesteuertes Aufspanngerät für die Werkzeug-Schleifmaschine bilden.

Weitere Merkmale der Erfindung ergeben sich aus den Unteransprüchen.

Die erfindungsgemäße Zusammenfassung der für eine numerische Steuerung von Werkzeugschleifvorgängen notwendigen, an sich bekannten Bauteile zu einem Aufsatzgerät gestattet auf verblüffend einfache Weise, vorhandene Werkzeugschleifmachinen in numerisch gesteuerte Werkzeugschleifmachinen umzurüsten. Da bei einer solchen Maschine nach dem Umrüsten die nicht mehr benötigten Schlitten stillgesetzt werden, ist die Schleifgenauigkeit der vorhandenen Werkzeug-Schleifmaschine im wesentlichen durch die Genauigkeit des Aufsatzgerätes bestimmt.

Ein weiterer Vorteil ist darin zu sehen, daß bei dem erfindungsgemäßen Aufsatzgerät die Reitstockspitze an allen Schwenk- und Hubbewegungen des Aufsatzgerätes teilnimmt, da dieser am Teilkopf starr aber längsverschieblich gelagert ist. Es können daher auch lange und dünne kegelige Werkzeuge maßgenau geschliffen werden.

Schließlich erleichtert das erfindungsgemäße Aufsatzgerät auch die Wartung und die Durchführung anfallender Schleifarbeiten im Betrieb, da das Aufsatzgerät mit unterschiedlichen Werkzeugschleifmaschinen verbindbar ist und insbesondere beim Einsatz mehrerer solcher Aufspanngeräte eine gute Auslastung der Werkzeugschleiferei erreichbar ist, dies umso mehr, als das erfindungsgemäße Aufsatzgerät gegenüber einer numerisch gesteuerten Universal-Werkzeugschleifmaschine wohlfeil ist.

Die erforderliche Software ist hier, da nicht zur Erfindung gehörend, nicht angesprochen.

Die Erfindung ist nachfolgend anhand eines in der Zeichnung mehr oder minder schematisch dargestellten Ausführungsbeispieles beschrieben.

Im einzelnen zeigen

Figur 1 eine Vorderansicht eines Aufsatzgerätes gemäß der Erfindung,

Figur 2 eine Seitenansicht des Aufsatzgerätes nach Fig. 1

Figur 3 die gegenüberliegende Seitenansicht des Aufsatzgerätes gemäß Figur 1 und

Figur 4 eine Draufsicht auf das Aufsatzgerät nach Fig. 1.

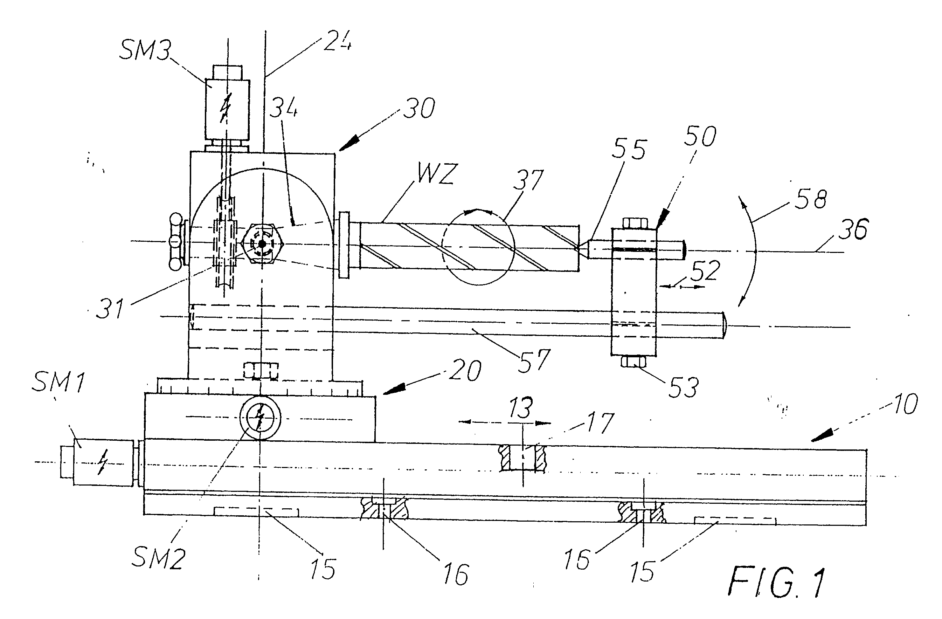

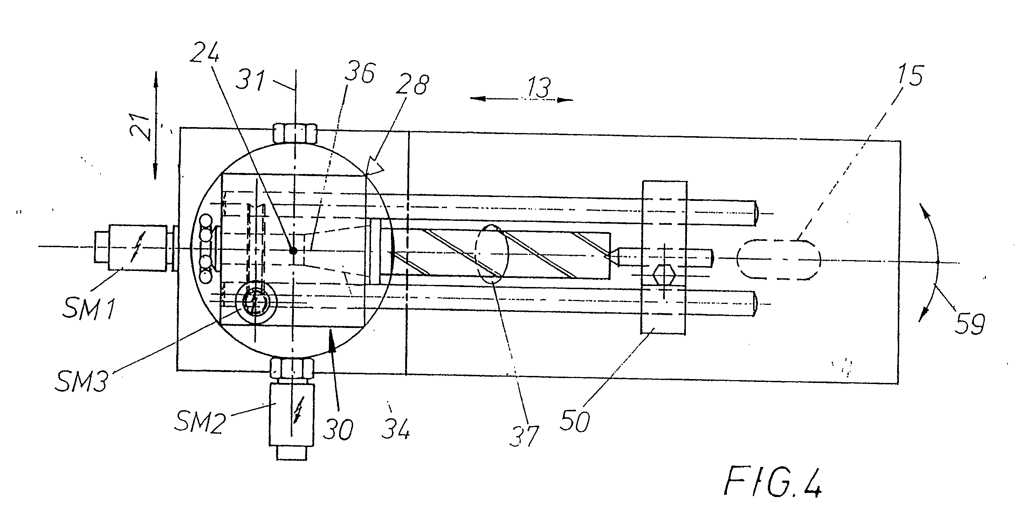

Wie insbesondere die Figuren 1 und 4 zeigen, sind auf einem numerisch steuerbaren Längsschlitten 10 ein numerisch gesteuerter Teilkopf 30 und ein Reitstock 50 angeordnet, wobei der Teilkopf 30 auf einen unmittelbar auf dem Längsschlitten 10 sitzenden Querschlitten 20 befestigt ist.

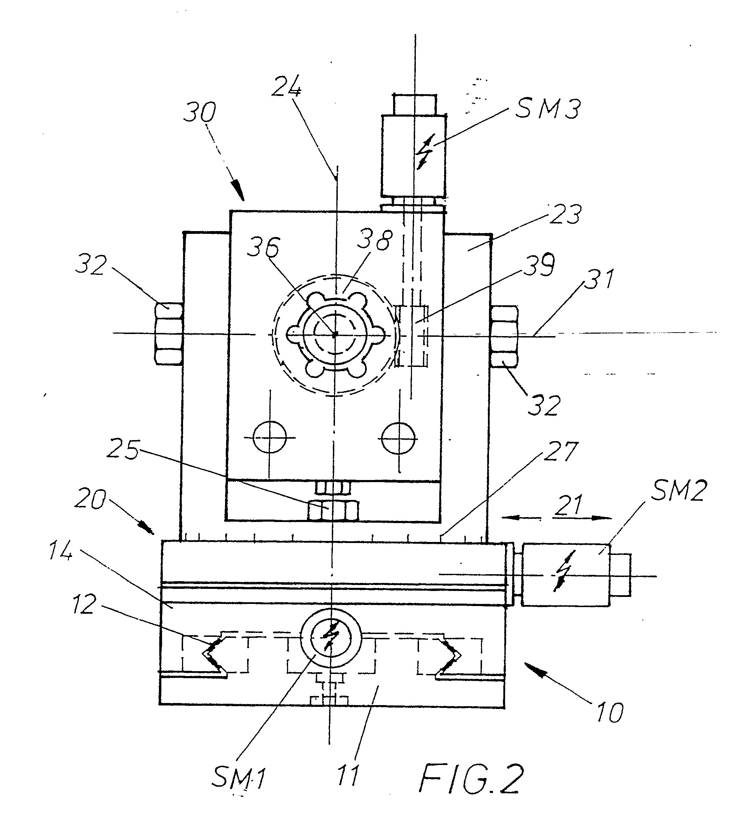

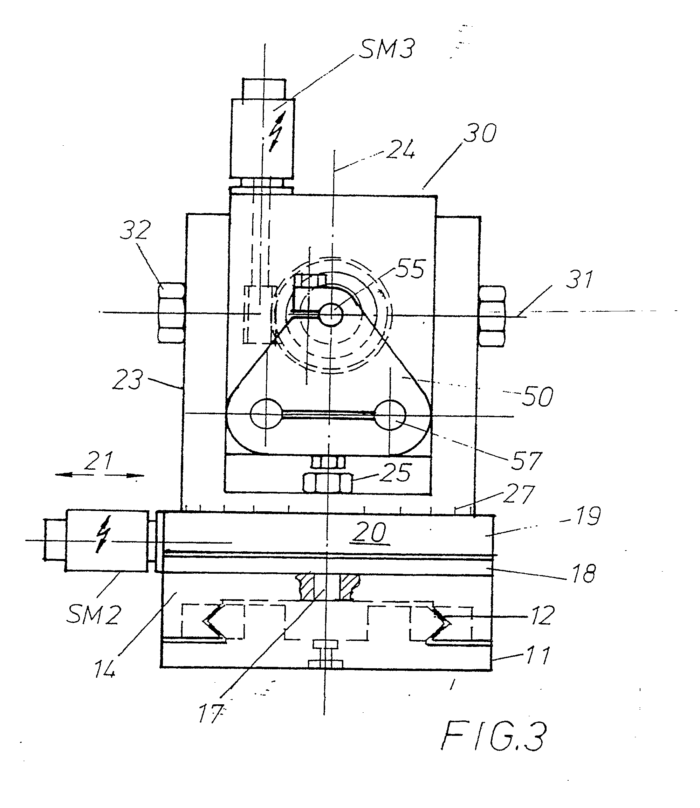

Wie insbesondere die Figuren 2 und 3 zeigen, umfaßt der Längsschlitten 10 eine untere Aufspannplatte 11 mit einer doppelseitigen, vorgespannten sogenannten Rollenführung 12 sowie das damit korrespondierende Längsschlitten-Oberteil 14. Dem Längsschlitten 10 sind ferner zugeordnet eine nicht näher dargestellte Kugelrollspindel, die von einem Teil einer nicht dargestellten Servo-Schleife bildenden Servo-Motor SM1 numerisch gesteuert angetrieben ist, zu der ein ebenfalls nicht dargestellter, abtastbarer Digitalmaßstab gehört.

Die Aufspannplatte 11 weist an ihrer der hier nicht dargestellten Werkzeugschleifmaschine zugewandten Unterseite Richtnuten 15 zur Aufnahme von hier nicht dargestellten Nutensteinen auf. Ferner sind sogenannte Senkloch-Durchgangsbohrungen 16 zur Aufnahme von ebenfalls nicht dargestellten Spannschrauben vorgesehen, um die Aufspannplatte und damit das Aufsatzgerät mit dem Längsschlitten der Werkzeug-Schleifmachine ausgerichtet und unverrückbar zu verbinden, wobei für die Betätigung der nicht dargestellten Befestigungsschrauben im Längsschlitten-Oberteil 14 eine Durchgangssbohrung 17 vorgesehen ist.

Über eine entsprechend ausgebildete Führung ist dem Längsschlitten 10 der bereits genannte Querschlitten 20 zugeordnet, der ebenfalls ein Unterteil 18 und ein Oberteil 19 umfaßt, die über eine Kugelrollspindel von einem Teil einer Servo-Schleife bildenden Servomotor SM2 gesteuert gegeneinander bewegbar sind, so daß der Querschlitten 20 in bezug auf Figur 4 in Richtung der Pfeile 21 numerisch gesteuert bewegbar ist. Der zur Servo-Schleife gehörende erforderliche Digitalmaßstab ist ebenfalls nicht dargestellt.

Auf dem Querschlitten 20 ist ein Lagerbock 23 um eine Hochachse 24 drehbar gelagert und über eine mittig angeordnete Spannschraube 25 in seiner Einstell-Lage fixierbar. Über eine Gradteilung 27 und einen Index 28 - vgl. Figur 4 - ist der Lagerbock gradgenau einstellbar.

In dem Lagerbock 23 ist der bereits genannte numerische Teilkopf 30 um eine Querachse 31 schwenkbar gelagert und mittels Feststellschrauben 32 in seiner Einstell-Lage feststellbar. Auch hier ist eine Gradteilung, wie oben beschrieben, vorhanden, doch der Übersicht halber nicht dargestellt.

Der numerische Teilkopf 30 ist üblicher Bauart und besitzt eine hier nicht näher dargestellte Werkzeug-Einspannvorrichtung 34, die um die sogenannte Hauptachse 36, also die Werkstückspindel, drehbar gelagert ist; vgl. Pfeil 37 in Figuren 1 und 4. Der Antrieb der Werkstückspindel erfolgt über ein Schneckenradgetriebe, bestehend aus dem Schneckenrad 38 und der Schnecke 39, die von einem Teil einer Servo-Schleife bildenden Servomotor SM3 numerisch gesteuert antreibbar ist. Für die Regelung dieses Antriebes ist der Servo-Schleife ein nicht dargestellter Drehgeber der Werkstückspindel zugeordnet.

Der Reitstock 50 ist auf einer Parallelführung 57 in Richtung der Pfeile 52 in Figur 1 längsverschieblich gelagert und über eine Feststellschraube 53 in seiner Einstell-Lage festklemmbar. Die Parallelführung ist mit dem Teilkopf 30 fest verbunden, so wie dies in Figur 1 dargestellt ist. Über eine Zentrierspitze 55 wird das in der Werkzeug-Einspannvorrichtung 34 - Werkstückspindel - eingespannte zu schleifende Werkzeug WZ - hier ein Schaftfräser - fixiert. Wie der Figur 1 sofort zu entnehmen ist, können also das eingespannte Werkzeug WZ samt Reitstock 50 um die Querachse 31 in Richtung der Pfeile 58 verschwenkt sowie um die Hochachse 24 in Richtung der Pfeile 59 - siehe Figur 4 - verschwenkt werden.

Da die Wirkungsweise einer numerischen Steuerung mit Servo-Motoren bekannt ist und handelsübliche Teile umfaßt, sind deren weiterer Aufbau und Wirkungsweise nicht näher beschrieben.

Wie sich aus dem Vorstehenden zweifelsfrei ergibt, ist ein in der Werkzeug-Einspannvorrichtung 34 des vorstehend beschriebenen Aufsatzgerätes eingespanntes Werkzeug WZ um die Achse 36 drehbar und um die Achsen 24 und 31, nämlich die Hoch- und Querachse, schwenkbar sowie mittels des Quertisches 20 in Richtung der Pfeile 21 und mittels des Längstisches 10 in Richtung der Pfeile 13 hin- und herbeweglich in bezug auf einen durch die hier nicht dargestellte Werkzeug-Schleifmaschine gegebenen Bezugspunkt - in aller Regel der Angriffspunkt des Schleifwerkzeuges am zu schleifenden Werkstück -, und zwar über die Servo-Motoren SM1 bis SM3 numerisch, d.h. bahngesteuert, bewegbar.

Nach dem Aufspannen des Aufsatzgerätes auf den Längsschlitten einer üblichen Werkzeug-Schleifmaschine kann also das jeweils im Aufsatzgerät eingespannte Werkzeug in der gewünschten Weise selbsttätig geschliffen werden. Selbstverständlich werden hierbei der zur Werkzeug-Schleifmachine gehörende, höhenverstellbare, um mindestens eine Achse - vorzugsweise die Hochachse - schwenkbare Schleifkopf und seine Einstellmittel unverändert benutzt. Eine durch das Aufsatzgerät bedingte Spitzenhöhenverschiebung läßt sich auf einfache Weise mittels eines einzufügenden Distanzstückes am Schleifkopf einfach und sicher aufheben.

**Ansprüche**

1. Anordnung für eine numerisch gesteuerte Werkzeug-Schleifmaschine mit einem Aufspanntisch, einem höhenverstellbaren, um mindestens eine Achse schwenkbaren Schleifkopf, einem Teilkopf mit einer Werkzeug-Einspannvorrichtung und einem Reitstock, dadurch **gekennzeichnet,** daß der Teilkopf (30) als numerisch steuerbarer Teilkopf ausgebildet ist und mit seiner Werkzeug-Einspannvorrichtung (34) sowie dem Reitstock (50) auf einem numerisch steuerbaren Längsschlitten (10) querbeweglich (Querschlitten 20) und um seine Hochachse (24) drehbar gelagert ist und alle Bauteile (10, 20, 30, 50) derart angeordnet sind, daß sie ein bahngesteuertes Aufspanngerät für die Werkzeug-Schleifmachine bilden.

2. Anordnung nach Anspruch 1, dadurch **gekennzeichnet,** daß der Teilkopf (30) über einen numerisch gesteuerten Querschlitten (20) mit dem Längsschlitten (10) verbunden ist.

3. Anordnung nach den Ansprüchen 1 und 2, dadurch **gekennzeichnet,** daß Reitstock (50) und Teilkopf (30) über eine Parallelführung (57) längsbeweglich aber starr derart miteinander verbunden sind, daß alle Bewegungen des Teilkopfes auch dem Reitstock aufgezwungen sind.

4. Anordnung nach Anspruch 2, dadurch **gekennzeichnet,** daß der Querschlitten (20) einen um die Hochachse (24) dreh- und feststellbar gelagerten Lagerbock (23) trägt, in dem der numerisch gesteuerte Teilkopf (30) um eine Querachse (31) schwenkbar gelagert ist.

5. Anordnung nach den Ansprüchen 1 bis 4, dadurch **gekennzeichnet,** daß dem Längsschlitten (10) Befestigungs- und Ausrichtorgane (15, 16) an seiner dem Längsschlitten der umzurüstenden Werkzeug-Schleifmaschine zugewandten Aufspannplatte (11) zugeordnet sind.

6. Anordnung nach Anspruch 5, dadurch **gekennzeichnet,** daß als Ausrichtorgane Nutensteine und als Befestigungsorgane Spannschrauben dienen, die über eine Durchgangsbohrung (17) im Oberteil (14) des Längsschlittens (10) zugängig sind.

FIG.1

SM3 24 34 30 WZ 37 55 50 58 36
52
57 53
SM1 20 13 17 10
SM2 31 15 16 15 15

EP 0 426 146 A2

FIG.2

FIG.3

FIG.4